# EUROPÄISCHE PATENTSCHRIFT

(11) **EP 2 560 859 B1**
(45) Veröffentlichungstag und Bekanntmachung des Hinweises auf die Patenterteilung: **11.06.2014**
(21) Anmeldenummer: 11714039.2
(22) Anmeldetag: 13.04.2011
(51) Int. Cl.: B62D 7/04, B62D 11/16

(54) **BEWEGBARES SYSTEM**
DISPLACEABLE SYSTEM
SYSTÈME MOBILE

(30) Priorität: 21.04.2010 DE 102010015713
(43) Veröffentlichungstag der Anmeldung: 27.02.2013
(73) Patentinhaber: Schaeffler Technologies GmbH & Co. KG, 91074 Herzogenaurach (DE)
(72) Erfinder: SMETANA, Tomas, 91074 Herzogenaurach (DE); FISCHER, Raphael, 91074 Herzogenaurach (DE); GOMBERT, Bernd, 82229 Seefeld (DE)
(86) Internationale Anmeldenummer: PCT/EP2011/055758
(87) Internationale Veröffentlichungsnummer: WO 2011/131525

(56) Entgegenhaltungen:
- DE-A1-102004 014 773
- JP-A- 55 039 846

## Beschreibung

Die Erfindung betrifft ein bewegbares System. Im Besonderen betrifft die Erfindung ein bewegbares System, das zur Bewegung innerhalb einer Ebene mindestens einen Satz auf zur Ebene parallelen, individuellen Radachsen paarweise angeordnete Räder aufweist. Der Satz ist dabei insgesamt um mindestens eine zu den Radachsen und zur Ebene im Wesentlichen senkrechte Achse drehbar ausgebildet.

### Hintergrund der Erfindung

Die deutsche Offenlegungsschrift DE 10 2004 014 773 A1 offenbart eine Antriebseinrichtung für ein Flurförderfahrzeug. Das Flurförderfahrzeug besitzt einen um eine Vertikalachse drehbaren Drehschemel und zwei parallel und spiegelsymmetrisch zur Vertikalachse am Drehschemel gelagerte Antriebsräder. Zwischen den Antriebsrädern ist eine Einrichtung zum Erzeugen einer Differentialwirkung vorgesehen, die zwischen den beiden Antriebsrädern angeordnet ist. Gemäß einer Ausführungsform zum Erzeugen einer Differentialwirkung zwischen den beiden Antriebsrädern ist jedes Antriebsrad mit einem eigenen, als Radnabenmotor ausgebildeten Motor gekoppelt.

Die internationale Patentanmeldung WO 20091082496 A1 offenbart eine Vorrichtung zum Transportieren von Gebäuden. Dabei ruht das zu transportierende Gebäude auf einer Unterstützungsstruktur, welche wiederum vier bewegbare Systeme aus jeweils mindestens zwei Rädern umfasst. Jedem der Räder eines bewegbaren Systems ist ein Motor zugeordnet, um das entsprechende Rad anzutreiben. Mittels eines Kontrollsystems ist es dem Bediener möglich, das Transportsystem zu steuern. Hierzu werden die einzelnen Motore an dem bewegbaren System entsprechend betätigt, damit das ganze Transportsystem in die vorgesehene Richtung bzw. an die vorgesehene Position bewegt werden kann.

Die japanische Patentanmeldung JP 2004-090903 skizziert ebenfalls ein bewegbares System, das aus mindestens zwei Rädern besteht, die auf einer Achse angeordnet sind. Ebenso ist das bewegbare System um eine Achse senkrecht zur Radachse drehbar. Jedem Rad des bewegbaren Systems ist ein einzelner Antrieb zugeordnet. Durch geeignete Steuerung der einzelnen Antriebe der Räder kann das bewegbare System entsprechend gelenkt bzw. gesteuert werden.

Die japanische Patentanmeldung JP 55-039846 offenbart ebenfalls ein Transportsystem, das mit mehreren bewegbaren Systemen versehen ist. Die bewegbaren Systeme sind derart steuerbar, dass die Bewegung des Transportsystems um Ecken eines Gebäudes oder eines Lagers gewährleistet ist. Jedes bewegbare System des Transportsystems besteht aus zwei einzelnen Rädern, die jeweils mit einem eigenen Antrieb versehen sind. Durch geeignete Steuerung der Antriebe der Räder eines jeden bewegbaren Systems kann somit das Transportsystem gesteuert um die Ecken bewegt werden.

Das US-Patent 3,827,517 offenbart ebenfalls ein bewegbares System, welches zwei Räder umfasst, die in einer Halterung angeordnet sind. Jedem Rad ist dabei ein Motor zugeordnet. Der Motor wird hydrostatisch betrieben.

Die japanische Patentanmeldung JP 2008-213570 skizziert ebenfalls ein bewegbares System, das zwei Räder umfasst, die auf einer gemeinsamen Radachse angeordnet sind. Ferner ist eine Achse vorgesehen, die senkrecht zur Radachse und zur Ebene der Bewegung des bewegbaren Systems angeordnet ist. Um diese Achse ist das bewegbare System drehbar. Jedem Rad des bewegbaren Systems ist ein Antriebssystem zugeordnet. Die Antriebssysteme sind dabei für jedes Rad identisch ausgebildet.

Der Erfindung liegt die Aufgabe zugrunde, ein bewegbares System zu schaffen, das kostengünstig ist und bei vielen Fahrwerken in den verschiedensten Anwendungsbereichen Einsatz findet.

Die obige Aufgabe wird durch ein bewegbares System gelöst, welches die Merkmale des Anspruchs 1 umfasst.

Bei der vorliegenden Erfindung handelt es sich um eine radintegrierte bzw. radnahe Antriebseinheit, welche in einem bewegbaren System zugeordnet oder integriert ist. Das bewegbare System ist zur Bewegung in einer Ebene ausgebildet, Das bewegbare System weist mindestens einen Satz von mindestens zwei paarweise angeordneten Rädern auf, welcher auf mindestens einer zu einer Ebene parallelen Radachse angebracht ist. Ferner sind der Satz und somit auch das bewegbare System insgesamt um mindestens eine zu den Radachsen und zur Ebene im Wesentlichen senkrechten Achse drehbar ausgebildet. Für die mindestens zwei auf der Radachse angeordneten Räder eines Satzes sind ein einziger elektrischer Antriebsmotor, ein Differential variabler Momentenverteilung und ein Stellglied vorgesehen. Das Stellglied kann in einer bevorzugten Ausführungsform als elektrischer Stellmotor ausgebildet sein. Die Antriebseinheit für das bewegbare System ist somit aus dem elektrischen Antriebsmotor, dem Differential und dem Stellglied (bzw. elektrischen Stellmotor) gebildet. Das elektrische Stellglied wirkt dabei derart auf das Differential, dass radindividuell die vom einzigen elektrischen Antriebsmotor erzeugten Momente innerhalb der Radachse auf die Räder individuell verteilbar sind. Die Radachse ist geteilt ausgebildet, so dass die mindestens zwei paarweisen Räder auf der Radachse oder den Radachsen paarweise individuell angetrieben werden können.

Mittels der Erfindung ist es möglich, über eine Differentialwirkung zwei oder mehr Räder elektrisch anzutreiben und/oder zu lenken. Dies wird heute bereits in ähnlicher Art und Weise bei Flugzeugfahrwerken oder auch bei Gabelstaplern mit paarweise an drehbaren Achsen angebrachten elektrisch angetriebenen Rädern eingesetzt. Diese vorzugsweise paarweise angeordneten Räder können sich wie die Rollen eines Bürostuhls um die eigene Achse drehen bzw. mit einer entsprechend angeordneten Vielgelenkkinematik für Raupen- und Bergungsfahrzeuge aller Art verwendet werden. Die erfindungsgemäße Ausführung des bewegbaren Systems kann für alle Arten von Fahrzeugen oder fahrzeugähnlichen Geräten, wie z. B. Gabelstapler oder Behindertenrollstühle, welche auch geführt werden können, verwendet werden.

Der Satz auf der zur Ebene parallelen Radachse angeordneten Räder ist um eine weitere Achse schwenkbar, die parallel zur Ebene und senkrecht zur Radachse oder den Radachsen angeordnet ist.

Bei inaktivem Stellglied bzw. inaktivem elektrischen Stellmotor ist die radindividuelle Verteilung der Drehmomente auf die auf den Radachsen angeordneten Räder gleich groß. Bei aktivem Stellglied oder aktivem elektrischen Stellmotor ist die radindividuelle Verteilung der Drehmomente der auf den Radachsen angeordneten Räder des bewegbaren Systems unterschiedlich. Durch diesen Unterschied ist somit eine Drehung des Satzes insgesamt um die zu den Radachsen und zur Ebene im Wesentlichen senkrechte Achse möglich. Somit ist es aufgrund der Drehung des Satzes um die zur Radachse und zur Ebene im Wesentlichen senkrechte Achse möglich, ein Fahrzeug gezielt, genau und eng zu lenken.

Das Differential mit variabler Momentenverteilung, welches zwischen dem Antriebsmotor und dem Stellglied bzw. elektrischen Stellmotor angeordnet ist, besteht aus zwei identischen Planetengetrieben. Die individuelle Verteilung der Momente auf die Räder eines Satzes erfolgt stufenlos über das aktive Moment des Stellglieds.

Das Stellglied kann gemäß einer Ausführungsform als elektrischer Stellmotor ausgebildet sein. Die Leistung des elektrischen Stellmotors ist kleiner als die Leistung des Antriebsmotors. Die Leistung des elektrischen Stellmotors kann dabei mindestens zehnfach kleiner sein, als die des elektrischen Antriebsmotors. Der elektrische Antriebsmotor und der elektrische Stellmotor sind als Hohlwellenmotore ausgebildet.

Dem bewegbaren System ist ein Sensorsystem zugeordnet, mit dem Zustände des bewegbaren Systems erfassbar sind. Die mit dem Sensorsystem zu erfassenden Zustände sind die im bewegbaren System wirkenden Kräfte und oder Momente. Das Sensorsystem kann ferner ein Messystem umfassen, mit dem Wege und/oder Postionen und/oder Beschleunigungen erfasst werden.

Eine Kommunikationselektronik kann vorgesehen sein, mittels der die vom Sensorsystem erfassten analogen Signale und/oder digitalen Daten an ein Leitsystem übertragen werden. Eine Leistungselektronik kann jeweils im Antriebsmotor und/oder im Stellglied integriert sein. Für die Kühlung der Leistungselektronik und/oder des Antriebsmotors und des Stellglieds (bzw. Stellmotors) kann ein Kühlsystem vorgesehen sein, das mit den verschiedensten aus dem Stand der Technik bekannten Kühlmitteln arbeitet. Die Daten- bzw. Signalübertragung vom Sensorsystem oder den Sensorsystemen an das Leitsystem kann mittels einer kabellosen Übertragung erfolgen. Das Leitsystem übernimmt eine fahrdynamische und modellbasierte Regelung des mindestens einen bewegbaren Systems. Jedes der bewegbaren Systeme kann mit Abstandssensoren versehen sein, die eventuelle Hindernisse ermitteln, die eine freie Beweglichkeit der bewegbaren Systeme einschränken. Eine Vielzahl der Elemente des bewegbaren Systems kann auch aus Leichtbaumaterialien, wie z.B. Kunststoff, faserverstärktem Kunststoff, Aluminium, Magnesium etc., gefertigt sein.

Die an einem bewegbaren System angeordneten Räder sind nicht auf zwei Räder beschränkt. Die Räder können in den verschiedensten Ausführungen auf den Achsen eines bewegbaren Systems angeordnet sein. So können die Räder einen unterschiedlichen Durchmesser ausweisen. Ebenso ist es möglich, dass die mindestens paarweise angeordneten Räder mit einem Sturz und/oder einem Schräglaufwinkel ausgeführt sind.

Das bewegbare System ist um eine weitere Achse schwenkbar, wobei die Achse im Wesentlichen parallel zur Ebene und senkrecht zu den Radachsen ausgerichtet ist. Die Schwenkachse kann auch außermittig zu einer gedachten Verbindungsline der auf den Achsen angeordneten Rädern angebracht sein. Mittels der Erfindung ist es möglich, eine hochintegrierte Radträgereinheit herzustellen, bei welchem Antrieb, Lenkung, Bremse, Feder und Dämpfereinheit integriert sind. Mit der Erfindung wird über das E-Differential nicht nur vorteilhaft die Lenkung bewirkt, sondern darüber hinaus die dringende Forderung nach der fail-save Sicherheit erfüllt. Bei stromlosem Zustand würde der Stellmotor für die variable Momentenverteilung das System momentenfrei schalten und somit ein Blockieren der Räder unmöglich machen. Durch die kompakte Anordnung von Antriebsmotor, Differential und Stellmotor ist es möglich, die Erfindung auch bei Rollstühlen, Gabelstaplern und Krankenhausbetten einzusetzen. Ferner kann die Erfindung außerdem bei Baumaschinen und im Förderfahrzeugbereich zur Anwendung kommen. Ein besonderer Vorteil der gegenwärtigen Erfindung ist, dass nur ein einziger Antriebsmotor vorgesehen ist, und somit den beiden Rädern des bewegbaren Systems nicht zwei identische Motoren mit gleicher Antriebsleistung zugeordnet werden müssen.

Im Folgenden sollen Ausführungsbeispiele die Erfindung und ihre Vorteile anhand der beigefügten Figuren näher erläutern.
- Figur 1: zeigt schematisch den Aufbau eines Antriebssystems zur variablen Momentenverteilung, gemäß dem Stand der Technik.
- Figur 2: zeigt eine schematische Ansicht des erfindungsgemäßen bewegbaren Systems, bei dem der Antriebsmotor, das Differential und der Stellmotor auf der Radachse angeordnet sind.
- Figur 3: zeigt die Situation, bei der der Stellmotor inaktiv ist und somit eine gleiche Verteilung der Momente auf die auf der Radachse angeordneten Räder des bewegbaren Systems vorliegt,
- Figur 4: zeigt die Situation, bei der der Stellmotor aktiv ist und somit eine unterschiedliche Momentenverteilung auf die Räder des bewegbaren Systems durchführt.
- Figur 5: zeigt die Anbindung des bewegbaren Systems in ein Fahrzeug.
- Figur 6: zeigt die Anbindung des bewegbaren Systems in ein Fahrzeug und dessen Verschwenken bzgl. von Bodenunebenheiten.

Für gleiche oder gleich wirkende Elemente der Erfindung werden identische Bezugszeichen verwendet. Ferner werden der Übersicht halber in den einzelnen Figuren nur Bezugszeichen dargestellt, die für die Beschreibung der jeweiligen Figur erforderlich sind. Die dargestellten Ausführungsformen stellen lediglich Beispiele dar, wie das erfindungsgemäß bewegbare System ausgestaltet sein kann. Sie stellen somit keine abschließende Begrenzung der Erfindung dar. In der nachfolgenden Beschreibung wird das zur initiierung der variablen Momentenverteilung verwendete Stellglied 12 als elektrischer Stellmotor bezeichnet. Der elektrische Stellmotor stellt somit eine mögliche Ausführungsform dar, wie das Stellglied 12 ausgestaltet sein kann. Die Beschränkungen der Beschreibung auf den Begriff "elektrischer Stellmotor" soll nicht als Beschränkung der Erfindung aufgefasst werden. Es ist für einen Fachmann selbstverständlich, dass das Stellglied 12 technisch unterschiedlich ausgeführt sein kann.

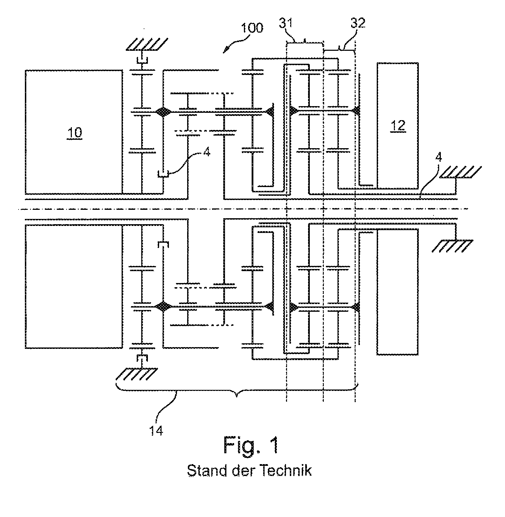

Figur 1 zeigt eine schematische Ansicht des Systems 100 zur variablen Momentenverteilung innerhalb mindestens einer Achse 4 eines Fahrzeugs (nicht dargestellt). Die Ausgestaltung des Systems 100 ist dabei hinlänglich aus dem Stand der Technik bekannt. Es ist ein Antriebsmotor 10 vorgesehen, der auf ein Differential 14 mit variabler Momentenverteilung wirkt. Das Differential 14 besteht dabei aus zwei identischen Planetengetrieben 31 und 32. Auf die Planetengetriebe 31 und 32 wirkt ein Stellmotor 12. Gemäß der bevorzugten Ausführungsform ist der Antriebsmotor 10 als Elektromotor ausgebildet. Ebenso ist der Stellmotor 12 als Elektromotor ausgebildet. Dabei ist die Leistung des Antriebsmotors 10 mindestens zehnfach größer, als die Leistung des Stellmotors 12.

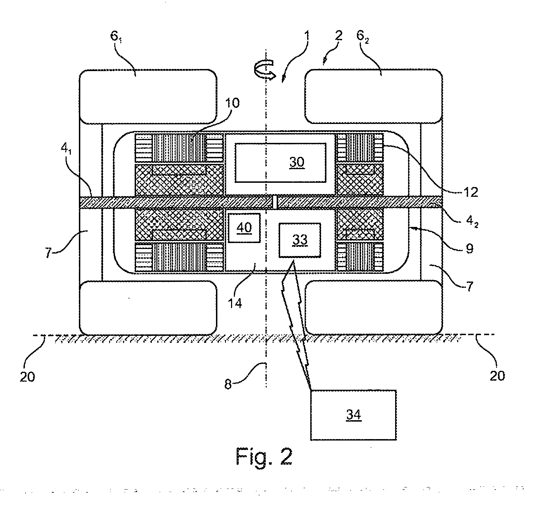

Figur 2 zeigt eine schematische Ansicht des erfindungsgemäßen bewegbaren Systems 1. Das bewegbare System 1 umfasst ein erstes Rad 6₁ und ein zweites Rad 6₂, welche beide auf Radachsen 4₁, 4₂ angeordnet sind. Es ist selbstverständlich, dass mehr als ein Rad 6₁ und 6₂ auf jeder der Radachsen 4₁, 4₂ vorgesehen sein kann. In den nachfolgenden Figuren ist immer nur ein Rad 6₁ oder 6₂ auf jeder der Radachsen 4₁, 4₂ vorgesehen, was nicht als eine Beschränkung der Erfindung aufgefasst werden kann.

Hierbei sind die beiden Räder 6₁ und 6₂ derart auf den Radachsen 4₁, 4₂ angeordnet, dass sie unabhängig voneinander in unterschiedliche Richtungen drehbar sind. Die Radachsen 4₁, 4₂ können in unterschiedlichen Orientierungen zueinander angeordnet sein. Das in den Figuren 2 bis 6 dargestellte bewegbare System 1 besteht somit aus einem Satz 2 von zwei Rädern 6₁ und 6₂, die jeweils auf einer Felge 7 angebracht und somit um die Radachse 4 drehbar ausgebildet sind. Die Radachse 4 ist dabei im Wesentlichen parallel zu einer Ebene 20 ausgerichtet, in der sich das bewegbare System bei Betätigung bewegen kann. Auf der Radachse 4 des bewegbaren Systems 1 ist eine Antriebseinheit 9 angeordnet. Die Antriebseinheit 9 besteht aus einem elektrischen Antriebsmotor 10, einem Differential 14 und einem Stellmotor 12. Die Bewegung des bewegbaren Systems 1 innerhalb der Ebene 20 wird mit dem einzigen elektrischen Antriebsmotor 10 bewirkt. Die Steuerung und Lenkung des bewegbaren Systems wird durch den elektrischen Stellmotor 12 erreicht, der somit eine radindividuelle Verteilung des Antriebsmoments des einzigen elektrischen Antriebsmotors 10 auf die Räder 6₁ und 6₂ innerhalb der Radachse 4 ermöglicht. Das bewegbare System 1 ist dabei derart ausgebildet, dass es ebenfalls um eine senkrecht zur Radachse und senkrecht zur Ebene 20 stehende Achse 8 drehbar ausgebildet ist.

Das bewegbare System 1 kann ferner mit einem Sensorsystem 30 versehen sein, mit dem Zustände des bewegbaren System 1 erfassbar sind. Über eine Kommunikationselektronik 33 werden die von dem Sensorsystem 30 erfassten analogen Signale und/oder digitalen Daten an ein Leitsystem 34 übertragen. Das Leitsystem 34 übernimmt eine fahrdynamische und modellbasierte Regelung des mindestens einen bewegbaren Systems. Eine Leistungselektronik 36 kann im Antriebsmotor 10 und/oder im Stellglied 12 integriert sein. Jeder Satz 2 der auf im Wesentlichen zur Ebene 20 parallele Radachsen 4₁, 4₂ der mindestens paarweise angeordneten Räder 6₁, 6₂ ist mit einem GPS-System 40 ausgerüstet, so dass eine Position eines jeden Satzes im Raum bestimmbar ist. Von der Kommunikationselektronik 33 zum Leitsystem 34 kann eine drahtlose Übertragung erfolgen.

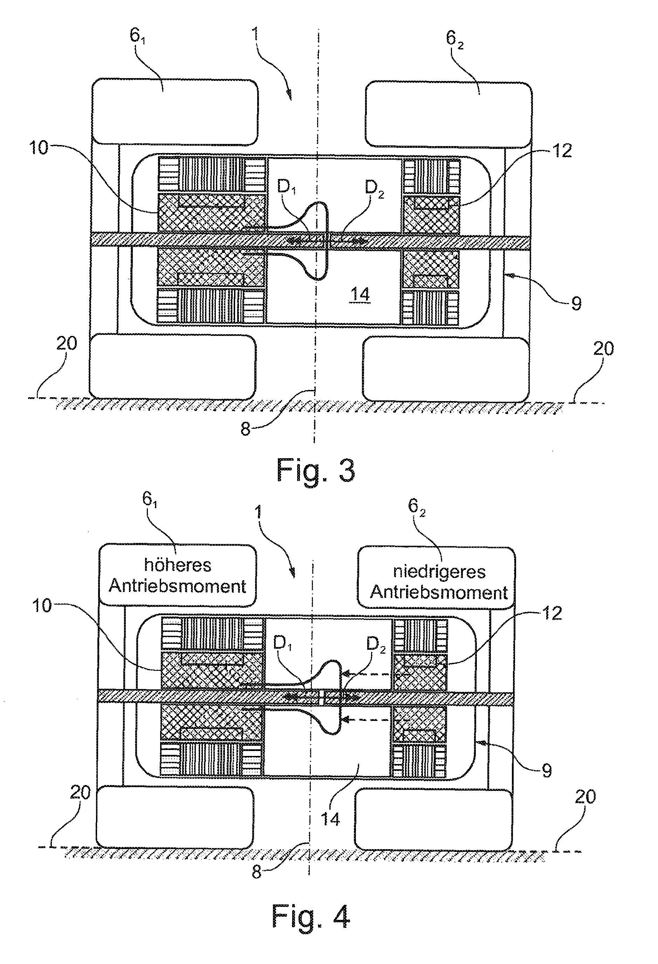

Figur 3 zeigt die Situation, in der auf die Räder 6₁ und 6₂ des bewegbaren Systems 1 die gleichen Momente wirken. Dies wird dadurch erreicht, dass der elektrische Stellmotor 12 inaktiv ist. Somit werden über den einzigen elektrischen Antriebsmotor 10 die beiden Räder 6₁ und 6₂ des elektrischen Systems angetrieben. Identische Antriebsmomente D₁ und D₂ werden auf die Räder 6₁ und 6₂ des bewegbaren Systems 1 geleitet. Das bewegbare System 1 bewegt sich somit in Geradeausfahrt innerhalb der Ebene 20.

Figur 4 zeigt die Situation, dass der elektrische Stellmotor 12 aktiv ist. Durch die Aktivität des elektrischen Stellmotors 12 wird somit eine unterschiedliche Verteilung der Antriebsmomente D₁ und D₂ auf die Räder 6₁ und 6₂ des bewegbaren Systems erzielt. Bei der in Figur 4 dargestellten Situation wirkt auf das erste Rad 6₁ ein höheres Antriebsmoment, als auf das zweite Rad 6₂ des bewegbaren Systems. Diese hier dargestellte Verteilung der Antriebsmomente D₁ und D₂ bewirkt, dass sich das bewegbare System 1 um die Achse 8 dreht, was somit eine Lenkwirkung des bewegbaren Systems 1 bewirkt. Es ist für einen Fachmann selbstverständlich, dass bei einem Fahrzeug mehrere bewegbare Systeme 1 vorgesehen sein können. Durch eine geeignete Steuerung der einzelnen elektrischen Stellmotore 12 der Antriebseinheiten 9 der einzelnen bewegbaren Systeme ist somit eine gezielte Steuerung des Fahrzeugs (nicht dargestellt) möglich.

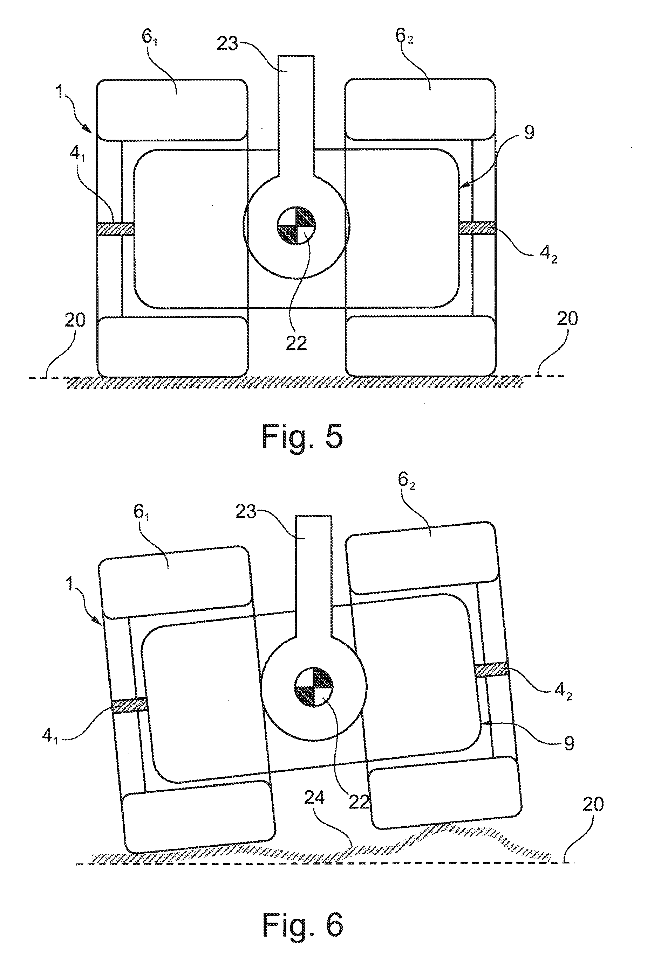

Figur 5 zeigt die Anbindung des bewegbaren Systems aus dem ersten Rad 6₁ und dem zweiten Rad 6₂ in ein Fahrzeug (hier nicht dargestellt). Das Anbindungselement 23 ist dabei um eine weitere Achse 22 schwenkbar, welche senkrecht zur Radachse 4 und parallel zur Ebene 20 ausgerichtet ist.

Figur 6 zeigt die Situation, dass das bewegbare System 1 über Unebenheiten 24 läuft, die innerhalb der Ebene 20 ausgebildet sind. In diesem Fall schwenkt das bewegbare System 1 um die Achse 22, welche durch das Anbindungselement 23 und im Wesentlichen ebenfalls durch die Radachse 4 verläuft. Durch diese Schwenkmöglichkeit um die Achse 22 ist immer gewährleistet, dass das bewegbare System 1 mit den Rädern 6₁ und 6₂ einen Bodenkontakt behält.

Die Erfindung wurde unter Bezugnahme auf eine bevorzugte Ausführungsform beschrieben. Es ist für einen Fachmann selbstverständlich, dass Änderungen und Abwandlungen durchgeführt werden können, ohne dabei den Schutzbereich der nachstehenden Ansprüche zu verlassen.

## Patentansprüche

1. Bewegbares System (1), das zur Bewegung in einer Ebene (20) mindestens einen Satz (2) von mindestens zwei paarweise angeordneten Rädern (6₁, 6₂) aufweist, der auf mindestens einer zur Ebene (20) im Wesentlichen parallelen Radachse (4₁, 4₂) angebracht ist und wobei der Satz (2) insgesamt um mindestens eine zu der mindestens einen Radachse (4₁, 4₂) und einer zur Ebene (20) im Wesentlichen senkrechten Achse (8) drehbar ausgebildet ist, **dadurch gekennzeichnet, dass** auf den Radachsen (4₁, 4₂) für die mindestens zwei Räder (6₁, 6₂) eines Satzes (2) ein einziger elektrischer Antriebsmotor (10), ein Differential (14) mit variabler Momentenverteilung und ein Stellglied (12) sitzt, wobei das Stellglied (12) derart auf das Differential (14) wirkt, dass radindividuell die vom einzigen elektrischen Antriebsmotor (10) erzeugten Momente innerhalb der Radachsen (4₁, 4₂) auf die mindestens zwei Räder (6₁, 6₂) verteilbar sind.

2. Bewegbares System (1) nach Anspruch 1, wobei der Satz (2) der auf den zur Ebene (20) im Wesentlichen parallelen Radachsen (4₁, 4₂) angeordneten Räder (6₁, 6₂) um eine weitere Achse (22), die im Wesentlichen parallel zur Ebene (20) und im Wesentlichen senkrecht zu den Radachsen (4₁, 4₂) ist, schwenkbar ist.

3. Bewegbares System (1) nach Anspruch 1 und 2, wobei bei dem inaktiven Stellglied (12) die radindividuelle Verteilung der Drehmomente auf die Räder (6₁, 6₂) auf den Radachsen (4₁, 4₂) gleich groß ist.

4. Bewegbares System (1) nach Anspruch 1 und 2, wobei bei dem aktiven Stellglied (4) die radindividuelle Verteilung der Drehmomente auf die Räder (6₁, 6₂) auf den Radachsen (4₁, 4₂) unterschiedlich ist, so dass eine Drehung des Satzes (2) insgesamt um die zu den Radachsen (4₁, 4₂) und zur Ebene (20) im Wesentlichen senkrechte Achse (8) bewirkbar ist.

5. Bewegbares System (1) nach den Ansprüchen 1 bis 4, wobei das Differential (14) mit variabler Momentenverteilung aus im Wesentlichen zwei identischen Planetengetrieben (31, 32) besteht, wobei die individuelle Verteilung der Momente auf die Räder (6₁, 6₂) eines Satzes (2) stufenlos über das aktive Moment des Stellglieds (12) einstellbar ist.

6. Bewegbares System (1) nach einem der Ansprüche 1 bis 5, wobei das Stellglied (12) als elektrischer Stellmotor ausgebildet ist, dessen Leistung kleiner ist, als die Leistung des Antriebsmotors (10).

7. Bewegbares System (1) nach Anspruch 6, wobei der elektrische Antriebsmotor (10) und der elektrische Stellmotor (12) als Hohlwellenmotore ausgebildet sind.

8. Bewegbares System (1) nach einem der Ansprüche 1 bis 7, wobei ein Sensorsystem (30) vorgesehen ist, mit dem Zustände des bewegbaren System (1) erfassbar sind.

9. Bewegbares System (1) nach einem der Ansprüche 1 bis 8, wobei eine Kommunikationselektronik (33) vorgesehen ist, mittels der analog Signale und/oder digitale Daten an ein Leitsystem (34) übertragbar sind.

10. Bewegbares System (1) nach Anspruch 9, wobei das Leitsystem (34) eine fahrdynamische und modellbasierte Regelung des mindestens einen bewegbaren Systems (1) übernimmt.

11. Bewegbares System (1) nach Anspruch 1, wobei eine Leistungselektronik (36) im Antriebsmotor (10) und/oder im Stellglied (12) integriert ist.

12. Bewegbares System nach einem der Ansprüche 1 bis 11, wobei jeder Satz (2) der auf im Wesentlichen zur Ebene (20) parallelen Radachsen (4₁, 4₂) mindestens paarweise angeordneten Räder (6₁, 6₂) mit einem GPS-System (40) ausgerüstet ist, so dass eine Position eines jeden Satzes im Raum bestimmbar ist.

## Claims

1. Displaceable system (1), which, for displacement in a plane (20), has at least one set (2) of at least two wheels (6₁, 6₂) arranged in pairs, which set is mounted on at least one wheel axle (4₁, 4₂) essentially parallel to the plane (20), and the set (2) being designed overall to be rotatable about at least one axis (8) essentially perpendicular to the at least one wheel axle (4₁, 4₂) and to the plane (20), **characterized in that** a single electric drive motor (10), a differential (14) with variable torque distribution and an actuating member (12) are seated on the wheel axles (4₁, 4₂) for the at least two wheels (6₁, 6₂) of a set (2), the actuating member (12) acting upon the differential (14) in such a way that the torques generated by the single electric drive motor (10) can be distributed to the at least two wheels (6₁, 6₂) individually within the wheel axles (4₁, 4₂).

2. Displaceable system (1) according to Claim 1, the set (2) of the wheels (6₁, 6₂) arranged on the wheel axles (4₁, 4₂) essentially parallel to the plane (20) being pivotable about a further axis (22) which is essentially parallel to the plane (20) and essentially perpendicular to the wheel axles (4₁, 4₂).

3. Displaceable system (1) according to Claims 1 and 2, the distribution of the torques to the wheels (6₁, 6₂) individually on the wheel axles (4₁, 4₂) being identical when the actuating member (12) is inactive.

4. Displaceable system (1) according to Claims 1 and 2, the distribution of the torques to the wheels (6₁, 6₂) individually on the wheel axles (4₁, 4₂) being different when the actuating member (12) is active, so that rotation of the set (2) overall about the axis (8) essentially perpendicular to the wheel axles (4₁, 4₂) and to the plane (20) can be brought about.

5. Displaceable system (1) according to Claims 1 to 4, the differential (14) with variable torque distribution consisting of essentially two identical epicyclic gears (31, 32), the individual distribution of the torques to the wheels (6₁, 6₂) of a set (2) being adjustable continuously via the active torque of the actuating member (12).

6. Displaceable system (1) according to one of Claims 1 to 5, the actuating member (12) being designed as an electric servomotor, the power of which is lower than the power of the drive motor (10).

7. Displaceable system (1) according to Claim 6, the electric drive motor (10) and the electric servomotor (12) being designed as quill motors.

8. Displaceable system (1) according to one of Claims 1 to 7, a sensor system (30) being provided, by means of which states of the displaceable system (1) can be detected.

9. Displaceable system (1) according to one of Claims 1 to 8, communication electronics (33) being provided, by means of which analogue signals and/or digital data can be transmitted to a management system (34).

10. Displaceable system (1) according to Claim 9, the management system (34) assuming a drive-dynamic and model-based regulation of the at least one displaceable system (1).

11. Displaceable system (1) according to Claim 1, power electronics (36) being integrated in the drive motor (10) and/or in the actuating member (12).

12. Displaceable system according to one of Claims 1 to 11, each set (2) of the wheels (6₁, 6₂) arranged at least in pairs on wheel axles (4₁, 4₂) essentially parallel to the plane (20) being equipped with a GPS system (40), so that a position of each set in space can be determined.

## Revendications

1. Système mobile (1), qui présente, pour le déplacement dans un plan (20), au moins un jeu (2) d'au moins deux roues (6₁, 6₂) disposées par paires, lequel est monté sur au moins un essieu de roue (4₁, 4₂) essentiellement parallèle au plan (20), le jeu (2) étant réalisé de manière à pouvoir tourner généralement autour d'au moins un axe (8) essentiellement perpendiculaire à l'au moins un essieu de roue (4₁, 4₂) et au plan (20), **caractérisé en ce que** sur les essieux de roue (4₁, 4₂) pour les au moins deux roues (6₁, 6₂) d'un jeu (2) repose un moteur d'entraînement électrique unique (10), un différentiel (14) avec une répartition de couple variable et un actionneur (12), l'actionneur (12) agissant sur le différentiel (14) de telle sorte que les couples produits par le moteur d'entraînement électrique unique (10) à l'intérieur des essieux de roue (4₁, 4₂) puissent être répartis individuellement aux roues sur les au moins deux roues (6₁, 6₂).

2. Système mobile (1) selon la revendication 1, dans lequel le jeu (2) des roues (6₁, 6₂) disposées sur les essieux de roue (4₁, 4₂) essentiellement parallèles au plan (20) peut pivoter autour d'un axe supplémentaire (22) qui est essentiellement parallèle au plan (20) et essentiellement perpendiculaire aux essieux de roue (4₁, 4₂).

3. Système mobile (1) selon les revendications 1 et 2, dans lequel lorsque l'actionneur (12) n'est pas activé, la répartition individuelle aux roues des couples sur les roues (6₁, 6₂) sur les essieux de roue (4₁, 4₂) est identique.

4. Système mobile (1) selon les revendications 1 et 2, dans lequel, lorsque l'actionneur (12) est activé, la répartition individuelle aux roues des couples sur les roues (6₁, 6₂) sur les essieux de roue (4₁, 4₂) est différente, de sorte qu'une rotation du jeu (2) généralement autour de l'axe (8) essentiellement perpendiculaire aux essieux de roue (4₁, 4₂) et au plan (20) puisse être produite.

5. Système mobile (1) selon les revendications 1 à 4, dans lequel le différentiel (14) avec une répartition de couple variable se compose d'essentiellement deux engrenages planétaires identiques (31, 32), la répartition individuelle des couples sur les roues (6₁, 6₂) d'un jeu (2) pouvant être ajustée en continu par le biais du couple actif de l'actionneur (12).

6. Système mobile (1) selon l'une quelconque des revendications 1 à 5, dans lequel l'actionneur (12) est réalisé sous forme de moteur de réglage électrique dont la puissance est inférieure à la puissance du moteur d'entraînement (10).

7. Système mobile (1) selon la revendication 6, dans lequel le moteur d'entraînement électrique (10) et le moteur de réglage électrique (12) sont réalisés sous forme de moteurs à arbre creux.

8. Système mobile (1) selon l'une quelconque des revendications 1 à 7, dans lequel un système de capteur (30) est prévu, avec lequel des états du système mobile (1) peuvent être détectés.

9. Système mobile (1) selon l'une quelconque des revendications 1 à 8, dans lequel une électronique de communication (33) est prévue, au moyen de laquelle des signaux analogiques et/ou des données numériques peuvent être transmis à un système de contrôle (34).

10. Système mobile (1) selon la revendication 9, dans lequel le système de contrôle (34) reprend une régulation dynamique de conduite et basée sur un modèle de l'au moins un système mobile (1).

11. Système mobile (1) selon la revendication 1, dans lequel une électronique de puissance (36) est intégrée dans le moteur d'entraînement (10) et/ou dans l'actionneur (12).

12. Système mobile selon l'une quelconque des revendications 1 à 11, dans lequel chaque jeu (2) de roues (6₁, 6₂) disposées au moins par paires sur des essieux de roue (4₁, 4₂) essentiellement parallèles au plan (20) est muni d'un système GPS (40) de telle sorte qu'une position de chaque jeu dans l'espace puisse être déterminée.
